# EUROPEAN PATENT APPLICATION

(11) **EP 4 597 725 A1**
(43) Date of publication of application: **06.08.2025**
(21) Application number: 23927918.5
(22) Date of filing: 17.03.2023
(51) Int. Cl.: H01M 50/449, H01M 50/457, H01M 50/489

(54) **SEPARATOR AND PREPARATION METHOD THEREFOR, SECONDARY BATTERY AND ELECTRICAL DEVICE**

(71) Applicant: Contemporary Amperex Technology (Hong Kong) Limited, Central (HK)
(72) Inventor: LI, Quan, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN); HAN, Chongwang, Ningde, Fujian 352100 (CN)
(74) Representative: Ziebig Hengelhaupt Intellectual Property Attorneys Patentanwaltskanzlei PartGmbB
(86) International application number: PCT/CN2023/082345
(87) International publication number: WO 2024/192600

(57) **Abstract**

A separator (10) includes a first base film (11) and a second base film (12), where a melting point of the second base film (12) is higher than a melting point of the first base film (11), and a creep flexibility of the first base film (11) is larger than a creep flexibility of the second base film (12). The first base film (11) and the second base film (12) have different creep flexibility, so that the two base films have different deformability under the action of a stress. Stress buffering of one layer of base film and strength support of the other layer of base film jointly suppress damage to the separator caused by dendrites and reduce the risk of a short circuit caused by the dendrites penetrating the separator, thereby improving the reliability and cycle life of a battery.

## Description

### TECHNICAL FIELD

This application pertains to the field of secondary battery technologies and specifically relates to a separator, a preparation method thereof, a secondary battery, and an electric apparatus.

### BACKGROUND

Secondary batteries have been widely used in various consumer electronic products and electric vehicles due to their outstanding advantages such as light weight, no pollution, and no memory effect.

With continuous development of the new energy industry, customers impose higher use requirements on secondary batteries. However, lithium precipitation is likely to occur in use of a battery. Therefore, there is a risk of failure caused by short circuit of electrodes. The reliability of secondary batteries is challenged.

### SUMMARY

In view of the technical problems existing in the background, this application provides a separator, a preparation method thereof, a secondary battery, and an electric apparatus, to improve the reliability of the separator and the secondary battery.

To achieve the above purpose, a first aspect of this application provides a separator including a first base film and a second base film, where a melting point of the second base film is higher than a melting point of the first base film, and a creep flexibility of the first base film is larger than a creep flexibility of the second base film.

Compared with the prior art, this application includes at least the following beneficial effects: the first base film and the second base film are configured to have different creep flexibility; by cooperation of the two layers of base film structures, the two base films have different deformability under the action of a stress; and the base film on at least one side may have higher deformability to buffer damage to the separator caused by lithium dendrites and suppress growth of the lithium dendrites, so that the risk of a short circuit of electrodes caused by the dendrites penetrating the separator is reduced, thereby improving the reliability of the battery in the long-term service life.

In any embodiment of this application, a ratio of the creep flexibility of the first base film and the creep flexibility of the second base film is 1.1-3.0, optionally 1.3-2.0. When the ratio of the creep flexibility of the first base film and the creep flexibility of the second base film meets the above condition, a buffering effect of the first base film against deformation can be further enhanced while the strength of the second base film is enhanced. This improves the strength of the overall separator and enhances the ability to resist dendrites, thereby improving the reliability of the battery in the long-term service life.

In any embodiment of this application, the creep flexibility of the first base film is 0.0013 MPa⁻¹-0.0050 MPa⁻¹, optionally 0.0013 MPa⁻¹-0.0032 MPa⁻¹; and/or the creep flexibility of the second base film is 0.0010 MPa⁻¹-0.0023 MPa⁻¹, optionally 0.0010 MPa⁻¹-0.0020 MPa⁻¹. When the ratio of the creep flexibility of the first base film and the creep flexibility of the second base film is within the above ranges, a buffering effect of the first base film against deformation can be further enhanced while the strength of the second base film is enhanced. This reduces the risk of a short circuit caused by dendrites penetrating the separator, thereby improving the reliability of the battery in the long-term service life.

In any embodiment of this application, a ratio of a relative molecular mass of a material of the first base film and a relative molecular mass of a material of the second base film is larger than or equal to 1.05, optionally 1.2-10. The ratio of the relative molecular mass of the material of the first base film and the relative molecular mass of the material of the second base film is limited to be within the above ranges, so that the first base film and the second base film can have sufficient flexibility and also have sufficient strength.

In any embodiment of this application, the relative molecular mass of the material of the first base film is 300000-2500000, optionally 500000-2000000; and/or the relative molecular mass of the material of the second base film is 10000-2000000, optionally 10000-1200000. The relative molecular mass of the material of the first base film and the relative molecular mass of the material of the second base film are limited to be within the above ranges, so that the creep flexibility of the first base film can be further enhanced, and thus the ability of the first base film to resist deformation is enhanced. In addition, support strength of the second base film is enhanced to reduce the probability of puncture of lithium dendrites, thereby improving the reliability of the battery in the long-term service life.

In any embodiment of this application, a crystallinity of the first base film is larger than a crystallinity of the second base film; and optionally a ratio of the crystallinity of the first base film and the crystallinity of the second base film is 1.1-5.0, optionally 1.5-3.0. The ratio of the crystallinity of the first base film and the crystallinity of the second base film is limited to be within the above ranges, so that the first base film and the second base film can have sufficient flexibility and also have sufficient strength.

In any embodiment of this application, the crystallinity of the first base film is 40%-90%, optionally 75%-85%; and/or, the crystallinity of the second base film is 20%-70%, optionally 30%-45%. The crystallinity of the first base film and the crystallinity of the second base film are limited to be within the above ranges, so that the first base film and the second base film can have sufficient flexibility and also have sufficient strength.

In any embodiment of this application, the melting point of the first base film is lower than the melting point of the second base film, and a ratio of the melting point of the first base film and the melting point of the second base film is 0.3-0.85, optionally 0.35-0.65. The ratio of the melting point of the first base film and the melting point of the second base film is limited to be within the above ranges, so that the first base film and the second base film can have good heat resistance and also have sufficient flexibility, thereby improving the reliability of the battery in the long-term service life.

In any embodiment of this application, the melting point of the first base film is 120°C-280°C, optionally 130°C-265°C; and/or, the melting point of the second base film is 150°C-360°C, optionally 160°C-350°C. The melting point of the first base film and the melting point of the second base film are limited to be within the above ranges, so that the first base film and the second base film can have good heat resistance and creep flexibility, thereby improving the reliability of the battery in the long-term service life.

In any embodiment of this application, the first base film and the second base film are each independently selected from at least one of polyolefin and a derivative thereof, halogenated polyolefin and a derivative thereof, polyether and a derivative thereof, polyether ether ketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof. Using at least one of the above materials as the material for the first base film and the second base film can provide the first base film and the second base film with good chemical stability and also enables the separator to have high flexibility and strength.

In any embodiment of this application, a binding layer is further disposed between the first base film and the second base film; the binding layer includes a binder; and optionally, the binding layer includes the binder and a filler. The arrangement of the binding layer between the first base film and the second base film can not only compensate process defects in an over-hot-pressing lamination process, but also further improve the stability of physical properties of the separator, thereby improving the reliability of the secondary battery.

In any embodiment of this application, the binder includes one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

In any embodiment of this application, the filler includes at least one of inorganic particles, organic particles, and an organic-metal framework material.

In any embodiment of this application, a thickness of the binding layer is less than or equal to 4 µm, optionally 0.5-2 µm. When the thickness of the binding layer is within the given range, the reliability of the battery in the long-term service life can be improved.

In any embodiment of this application, a transverse direction thermal shrinkage rate of the separator at 250°C for 1 h is less than or equal to 0.4%, optionally less than or equal to 0.25%.

In any embodiment of this application, a longitudinal direction thermal shrinkage rate of the separator at 250°C for 1 h is less than or equal to 0.4%, optionally less than or equal to 0.25%.

In any embodiment of this application, a transverse direction tensile strength of the separator is larger than or equal to 2500 kg/cm², optionally 3000 kg/cm²-4000 kg/cm².

In any embodiment of this application, a longitudinal direction tensile strength of the separator is larger than or equal to 2500 kg/cm², optionally 3000 kg/cm²-4000 kg/cm².

When at least one of the above properties of the separator is within the given range, the separator has good physical properties, thereby improving the reliability of the secondary battery.

A second aspect of this application provides a preparation method of separator. The preparation method includes: providing a first base film and a second base film, where a melting point of the second base film is higher than a melting point of the first base film, and a creep flexibility of the first base film is larger than a creep flexibility of the second base film; and laminating the first base film and the second base film to obtain the separator according to any embodiment of the first aspect.

In any embodiment of this application, the preparation method further includes: preparing a binding layer slurry, where the binding layer slurry includes a binder; coating the first base film and/or the second base film with the binding layer slurry; and then performing lamination. Optionally, the binding layer slurry includes the binder and a filler. When the binding layer slurry further includes the filler, the physical properties of the separator can be further improved, thereby improving the reliability of the secondary battery.

A third aspect of this application provides a secondary battery including the separator according to the first aspect of this application or a separator prepared using the method according to the second aspect of this application. When the secondary battery uses the separator provided, the reliability of the secondary battery can be improved.

In any embodiment of this application, a positive electrode plate and a negative electrode plate are further included; the separator is disposed between the positive electrode plate and the negative electrode plate; the first base film faces the negative electrode plate; the first base film has good creep flexibility; facing a negative electrode can enhance a puncture effect of dendrites and improve the reliability of the battery in the long-term service life; and the second base film facing a positive electrode has a higher melting point, which can improve the heat resistance.

A fourth aspect of this application provides an electric apparatus including the secondary battery according to the second aspect of this application. When the secondary battery of the electric apparatus uses the separator provided, the reliability of the electric apparatus can be improved.

The apparatus of this application includes the secondary battery provided in this application. Therefore, the apparatus includes at least the same advantages as the secondary battery.

### BRIEF DESCRIPTION OF DRAWINGS

To describe the technical solutions of this application more clearly, the following briefly describes the accompanying drawings used in this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of an embodiment of a separator of this application.
FIG. 2 is a schematic structural diagram of an embodiment of a separator of this application.
FIG. 3 is a schematic flowchart of an embodiment of a preparation method of separator of this application.
FIG. 4 is a schematic diagram of an embodiment of a secondary battery.
FIG. 5 is an exploded view of FIG. 4.
FIG. 6 is a schematic diagram of an embodiment of a battery module.
FIG. 7 is a schematic diagram of an embodiment of a battery pack.
FIG. 8 is an exploded view of FIG. 7.
FIG. 9 is a schematic diagram of an embodiment of an apparatus using a secondary battery as a power source.

### DESCRIPTION OF EMBODIMENTS

The following further describes this application with reference to specific embodiments. It should be understood that the specific embodiments are merely intended to describe this application instead of limiting the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of this specification, unless otherwise specified, the term "or (or)" is inclusive. That is, the phrase "A or (or) B" means "A, B, or both A and B". More specifically, any one of the following conditions satisfies the condition "A or B": A is true (or present) and B is false (or not present); A is false (or not present) and B is true (or present); or both A and B are true (or present).

In the description of this specification, it should be noted that "more than" and "less than" are inclusive of the present number and that "more" in "one or more" means two or more than two, unless otherwise specified.

Unless otherwise specified, the terms used in this application have well-known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

### Secondary battery

A secondary battery refers to a battery that can be charged after being discharged to activate active materials for continuous use.

Generally, a secondary battery includes a positive electrode plate, a negative electrode plate, a separator, and an electrolyte. During charging and discharging of the battery, active ions are intercalated and deintercalated back and forth between the positive electrode plate and the negative electrode plate. The separator is disposed between the positive electrode plate and the negative electrode plate for separation. The electrolyte conducts ions between the positive electrode plate and the negative electrode plate.

### [Separator]

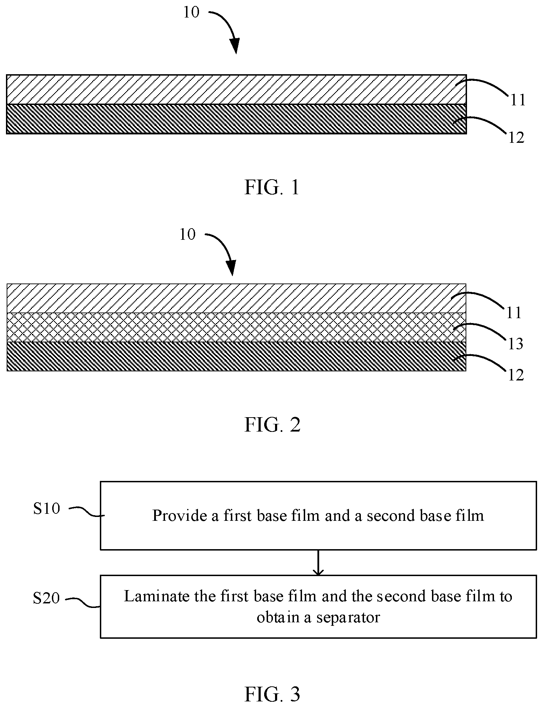

Referring to FIG. 1, an embodiment of this application provides a separator 10 including a first base film 11 and a second base film 12, where a melting point of the second base film is higher than a melting point of the first base film, and a creep flexibility of the first base film is larger than a creep flexibility of the second base film.

Without being limited to any theory, the inventors have found through extensive research that in the specific separator structure of this application, the first base film and the second base film are configured to have different creep flexibility, so that the two base films have different deformability under the action of a stress; the base film on one side has higher deformability; and when dendrites grow to puncture the separator, the base film with larger creep flexibility deforms to wrap the dendrites so as to buffer damage to the separator caused by the dendrites. In addition, the base film with smaller creep flexibility has small deformation and can provide sufficient support. Stress buffering of one layer of base film and strength support of the other layer of base film jointly suppress damage to the separator caused by the dendrites and reduce the risk of a short circuit caused by the dendrites penetrating the separator, thereby improving the reliability and cycle life of the battery in the long-term cycle life.

The inventors have found through in-depth research that in addition to satisfying the foregoing conditions, if the separator of this application optionally satisfies one or more of the following conditions, the performance of the secondary battery can be further improved.

In any embodiment of this application, a ratio of the creep flexibility of the first base film and the creep flexibility of the second base film is 1.1-3.0, optionally 1.3-2.0. In some embodiments, the ratio of the creep flexibility of the first base film and the creep flexibility of the second base film is optionally 1.4-1.8. In other embodiments, the ratio of the creep flexibility of the first base film and the creep flexibility of the second base film is optionally 1.1, 1.2, 1.4, 1.6, 1.7, 1.9, 2.0, 2.2, 2.4, 2.6, 2.8, 3.0, or the like, or a range defined by any two of these values. For example, the ratio of the creep flexibility of the first base film and the creep flexibility of the second base film is optionally 1.10-1.22, 1.22-1.40, 1.31-1.79, 1.40-1.70, 1.56-1.90, 1.70-2.39, 2.13-2.78, 2.35-2.78, 1.2-1.9, 1.6-2.6, 1.9-2.4, 2.6-2.8, or the like.

In these embodiments, when the ratio of the creep flexibility of the first base film and the creep flexibility of the second base film meets the above condition, the flexibility and the strength of the separator can be well balanced. The flexibility of the first base film can enhance the ability of the separator to resist an external force and play a certain buffer effect on deformation caused by the external force. The strength of the second base film can enhance the strength of the separator to resist the external force and reduce the risk of a short circuit caused by foreign matters (such as lithium dendrites) puncturing the separator, thereby improving the reliability and cycle life of the battery in the long-term cycle life.

In any embodiment of this application, the creep flexibility of the first base film is 0.0013 MPa⁻¹-0.0050 MPa⁻¹. In some optional embodiments, the creep flexibility of the first base film is 0.0013 MPa⁻¹-0.0032 MPa⁻¹. The creep flexibility of the first base film may be 0.0013 MPa⁻¹, 0.0015 MPa⁻¹, 0.0017 MPa⁻¹, 0.0019 MPa⁻¹, 0.0022 MPa⁻¹, 0.0025 MPa⁻¹, 0.0028 MPa⁻¹, 0.0031 MPa⁻¹, 0.0034 MPa⁻¹, 0.0039 MPa⁻¹, 0.0043 MPa⁻¹, 0.0048 MPa⁻¹, 0.0050 MPa⁻¹, or the like, or a range defined by any two of these values. For example, the creep flexibility of the first base film is 0.0013 MPa⁻¹-0.0015 MPa⁻¹, 0.0013 MPa⁻¹-0.0019 MPa⁻¹, 0.0017 MPa⁻¹-0.0022 MPa⁻¹, 0.0022 MPa⁻¹-0.0028 MPa⁻¹, 0.0025 MPa⁻¹-0.0032 MPa⁻¹, 0.0028 MPa⁻¹-0.0039 MPa⁻¹, 0.0015 MPa⁻¹-0.0017 MPa⁻¹, 0.0019 MPa⁻¹-0.0022 MPa⁻¹, 0.0025 MPa⁻¹-0.0028 MPa⁻¹, 0.0031 MPa⁻¹-0.0039 MPa⁻¹, 0.0043 MPa⁻¹-0.0048 MPa⁻¹, or the like.

In some optional embodiments, the creep flexibility of the second base film is 0.0010 MPa⁻¹-0.0023 MPa⁻¹. In some optional embodiments, the creep flexibility of the second base film is 0.0010 MPa⁻¹-0.0020 MPa⁻¹. The creep flexibility of the second base film may be 0.0010 MPa⁻¹, 0.0012 MPa⁻¹, 0.0014 MPa⁻¹, 0.0015 MPa⁻¹, 0.0016 MPa⁻¹, 0.0017 MPa⁻¹, 0.0018 MPa⁻¹, 0.0019 MPa⁻¹, 0.0020 MPa⁻¹, 0.0021 MPa⁻¹, 0.0022 MPa⁻¹, 0.0023 MPa⁻¹, or the like, or a range defined by any two of these values. For example, the creep flexibility of the second base film is 0.0010 MPa⁻¹-0.0013 MPa⁻¹, 0.0013 MPa⁻¹-0.0016 MPa⁻¹, 0.0014 MPa⁻¹-0.0020 MPa⁻¹, 0.0016 MPa⁻¹-0.0018 MPa⁻¹, 0.0020 MPa⁻¹-0.0023 MPa⁻¹, 0.0010 MPa⁻¹-0.0015 MPa⁻¹, 0.0015 MPa⁻¹-0.0020 MPa⁻¹, 0.0015 MPa⁻¹-0.0016 MPa⁻¹, 0.0017 MPa⁻¹-0.0019 MPa⁻¹, 0.0018 MPa⁻¹-0.0021 MPa⁻¹, 0.0020 MPa⁻¹-0.0021 MPa⁻¹, or the like.

When values of the creep flexibility of the first base film and the creep flexibility of the second base film are within the above ranges, two types of performance, the flexibility and the strength, of the separator can be well balanced. The flexibility of the first base film can enhance the ability of the separator to resist an external force and play a certain buffer effect on deformation caused by the external force. The strength of the second base film can enhance the strength of the separator to resist the external force and reduce the risk of a short circuit caused by foreign matters (such as lithium dendrites) puncturing the separator, thereby improving the reliability and cycle life of the battery in the long-term cycle life.

According to some embodiments, the creep flexibility of the first base film and the second base film can be tested using devices and methods known in the art. For example, reference may be made to the following steps: a to-be-tested sample is cut into a rectangular sample strip with a length of 50 mm and a width of 4 mm; the sample strip is clamped on a dynamic thermal mechanical analyzer; a test mode is adjusted to a creep mode; a test is performed at a temperature of 25°C for 220 min; and a value at a stable position of a curve is considered as a creep flexibility of the sample.

Persons skilled in the art know that the creep flexibility of the base film can be adjusted by adjusting intrinsic parameters (for example, one or more of the crystallinity, the relative molecular mass, and the like of the material of the base film) of the base film and preparation process parameters (for example, one or more of a stretch ratio, a stretch temperature, and the like) of the base film. For example, under a condition that the other conditions remain unchanged, a smaller relative molecular mass of the material of the base film indicates a larger creep flexibility, and a larger crystallinity indicates a smaller creep flexibility. Persons skilled in the art can adjust the creep flexibility of the base film within the parameter ranges provided in this application using known methods. For example, a base film with a desired creep flexibility can be achieved through a limited number of experiments by adjusting a production process of the base film (adjusting the crystallinity, the molecular mass, and the like).

In any embodiment of this application, a ratio of a relative molecular mass of a material of the first base film and a relative molecular mass of a material of the second base film is larger than or equal to 1.05, optionally 1.2-10. In some optional embodiments, a ratio of the relative molecular mass of the material of the first base film and the relative molecular mass of the material of the second base film is 2.2-8. In some embodiments, the ratio of the relative molecular mass of the material of the first base film and the relative molecular mass of the material of the second base film is 1.05, 1.1, 1.3, 1.5, 1.7, 2.0, 2.4, 2.8, 3.2, 3.6, 4.5, 4.9, 5.3, 5.6, 6.2, 6.7, 7.5, 7.9, 8.7, 9.4, 10, or the like, or a range defined by any two of these values. For example, the ratio of the relative molecular mass of the material of the first base film and the relative molecular mass of the material of the second base film is 1.05-1.3, 1.2-1.5, 1.1-1.7, 2.4-2.8, 2.2-2.6, 3.6-4.9, 4.5-5.3, 5.6-6.2, 6.7-7.9, 8.7-9.4, or the like.

In any embodiment of this application, the relative molecular mass of the material of the first base film is 300000-2500000, optionally 500000-2000000. In some optional embodiments, the relative molecular mass of the material of the first base film is 600000-1800000. In some embodiments, the relative molecular mass of the material of the first base film is optionally 300000, 340000, 420000, 500000, 750000, 900000, 1200000, 1360000, 1500000, 1700000, 1820000, 1900000, 1950000, 2000000, 2200000, 2500000, or the like, or a range defined by any two of these values. For example, the relative molecular mass of the material of the first base film is 300000-450000, 300000-500000, 500000-750000, 750000-1200000, 350000-500000, 750000-900000, 1200000-1360000, 1500000-1700000, 1820000-2100000, 2300000-2430000, or the like.

In some embodiments, the relative molecular mass of the material of the second base film is 10000-2000000, optionally 10000-1200000. In some embodiments, the relative molecular mass of the material of the second base film is 400000-800000. The relative molecular mass of the material of the second base film may be 10000, 25000, 100000, 200000, 350000, 190000, 280000, 370000, 510000, 650000, 800000, 1050000, 1130000, 1300000, 1440000, 1630000, 1770000, 1800000, 1930000, 2000000, or the like, or a range defined by any two of these values. For example, the relative molecular mass of the material of the second base film is 10000-25000, 25000-70000, 80000-150000, 25000-150000, 130000-180000, 150000-250000, 180000-400000, 300000-400000, 500000-650000, 190000-280000, 370000-510000, 650000-800000, 1050000-1130000, 1300000-1440000, 1670000-1770000, 1800000-1930000, or the like.

The relative molecular masses of the materials of the base films have meanings well known in the art, and can be measured using methods known in the art. For example, a high-temperature GPC tester (a differential refractive index detector) is used for testing.

A larger relative molecular mass of the material of the base film indicates a longer molecular chain, so that the chains may be intertwined more tightly, making the base film less likely to deform, thereby reducing the creep flexibility. Correspondingly, a smaller relative molecular mass of the material of the base film results in a larger creep flexibility. In addition, a larger relative molecular mass of the material of the base film indicates a corresponding larger strength. Therefore, when selecting the relative molecular mass of the material of the base film, it is necessary to balance the flexibility and strength of the material. To enhance the strength of the base film, a larger relative molecular mass may be selected. However, this reduces the creep flexibility.

In any embodiment of this application, a crystallinity of the first base film is larger than a crystallinity of the second base film; and optionally a ratio of the crystallinity of the first base film and the crystallinity of the second base film is 1.1-5.0, In some optional embodiments, the ratio of the crystallinity of the first base film and the crystallinity of the second base film is 1.5-3.0. The ratio of the crystallinity of the first base film and the crystallinity of the second base film may be 1.1, 1.3, 1.8, 2.2, 2.5, 2.9, 3.4, 3.7, 4.0, 4.5, 4.8, 5.0, or the like, or a range defined by any two of these values. For example, the ratio of the crystallinity of the first base film and the crystallinity of the second base film is optionally 1.1-1.3, 1.3-1.5, 1.5-1.8, 1.3-1.8, 1.8-2.5, 2.2-2.9, 2.9-3.4, 3.4-3.7, 3.7-4.0, 3.9-4.4, 4.4-5.0, or the like.

In any embodiment of this application, the crystallinity of the first base film is 40%-90%, optionally 75%-85%. The crystallinity of the first base film may be 40%, 45%, 50%, 59%, 64%, 70%, 75%, 78%, 80%, 82%, 86%, 88%, 90%, or the like, or a range defined by any two of these values. For example, the crystallinity of the first base film is 40%-45%, 45%-50%, 50%-59%, 60%-65%, 54%-62%, 62%-68%, 60%-71%, 72%-80%, 59%-80%, 64%-82%, 80%-86%, 82%-88%, or the like.

In some embodiments, the crystallinity of the second base film is 20%-70%, optionally 30%-45%. The crystallinity of the second base film may be 20%, 24%, 29%, 38%, 44%, 59%, 67%, 69%, 70%, or the like, or a range defined by any two of these values. For example, the crystallinity of the second base film is 20%-23%, 24%-29%, 29%-44%, 29%-38%, 38%-42%, 42%-47%, 48%-55%, 55%-59%, 60%-65%, 38%-59%, 59%-67%, 67%-70%, or the like.

According to some embodiments, the crystallinity can be tested using devices and methods known in the art. Specifically, 4-6 mg of a to-be-tested sample is placed in a sample chamber of a differential scanning calorimeter and heated from 25°C to 350°C at a heating rate of 10°C/min to obtain a melting endothermic curve; and a peak area of the curve and a reference value of 100% crystalline polyolefin are calculated to obtain the crystallinity.

Crystallinity is used to represent a proportion of a crystalline region in the material of the base film. Crystallization refers to an orderly arrangement of molecular chains, forming a molecular chain structure. Generally, a higher crystallinity indicates a more regular arrangement of the molecular chains.

Crystallinity also has certain influence on the creep flexibility of the base film. Generally, a larger crystallinity results in a smaller creep flexibility. An increase in crystallinity can enhance the strength of the base film, for example, can enhance puncture strength. Therefore, in addition to the relative molecular mass of the material of the base film, it is also necessary to balance the crystallinity to ensure that the separator has sufficient strength and flexibility. Therefore, in this application, the relative molecular mass of the material of the first base film is larger than the relative molecular mass of the material of the second base film, and the crystallinity of the first base film is larger than the crystallinity of the second base film, thereby enhancing the strength of the first base film and increasing the creep flexibility. That is, the relative molecular mass and the crystallinity of the first base film are balanced to enable the first base film to have high strength and high creep flexibility. Correspondingly, the second base film may be made of a material with more complex molecular chains, and then the creep flexibility is balanced by reducing the crystallinity. In addition, a branching degree of the material of the first base film may be smaller than a branching degree of the material of the second base film, to increase the creep flexibility. That is, the relative molecular mass, the branching degree, and the crystallinity of the first base film are balanced to enable the first base film to have high strength and high creep flexibility. Therefore, limiting the crystallinity and relative molecular mass of the material of the first base film, the crystallinity and relative molecular mass of the material of the second base film, and ratios thereof to be within the above ranges enables the first base film to have a larger creep flexibility than the second base film and also enables the separator to have a certain strength.

In any embodiment of this application, the melting point of the first base film is lower than the melting point of the second base film. A ratio of the melting point of the first base film and the melting point of the second base film is 0.3-0.85, optionally 0.35-0.65. For example, in some embodiments, the ratio of the melting point of the first base film and the melting point of the second base film is optionally 0.3, 0.35, 0.4, 0.5, 0.6, 0.65, 0.7, 0.8, 0.85, or the like, or a range defined by any two of these values. For example, the ratio of the melting point of the first base film and the melting point of the second base film is optionally 0.3-0.35, 0.35-0.4, 0.4-0.5, 0.5-0.6, 0.6-0.65, 0.5-0.7, 0.7-0.8, 0.8-0.85, or the like.

In any embodiment of this application, the melting point of the first base film is 120°C-280°C, optionally 130°C-265°C. In some embodiments, the melting point of the first base film is 120°C, 125°C, 130°C, 146°C, 150°C, 152°C, 165°C, 180°C, 196°C, 204°C, 220°C, 246°C, 258°C, 265°C, 270°C, 280°C, or the like, or a range defined by any two of these values. For example, the melting point of the first base film is 120°C-125°C, 125°C-130°C, 130°C-146°C, 146°C-152°C, 155°C-180°C, 180°C-206°C, 210°C-230°C, 231°C-240°C, 245°C-254°C, 255°C-265°C, or 265°C-280°C.

In some embodiments, the melting point of the second base film is 150°C-360°C, optionally 160°C-350°C. For example, in some embodiments, the melting point of the second base film is 150°C, 158°C, 165°C, 170°C, 185°C, 200°C, 210°C, 240°C, 255°C, 272°C, 296°C, 320°C, 335°C, 360°C, or the like, or a range defined by any two of these values. For example, the melting point of the second base film is 150°C-165°C, 165°C-170°C, 170°C-190°C, 190°C-210°C, 210°C-240°C, 240°C-272°C, 272°C-320°C, 320°C-340°C, or 340°C-360°C.

Excessively high and low melting points both affect the physical properties of the material of the base film. For example, if the melting point exceeds a preset melting point, even if the material has a quite high creep flexibility, it fails to inhibit puncture of dendrites due to its excessively low strength. The melting point of the first base film, the melting point of the second base film, and a ratio of them are limited to be within the above ranges, the second base film with a higher melting point supplements the heat resistance, and the first base film with a lower melting point supplements the flexibility, thereby allowing the separator to have good heat resistance and flexibility. This can improve the physical properties of the first base film and the second base film, thereby improving the reliability of the secondary battery.

According to some embodiments, the melting points of the first base film and the second base film have meanings well known in the art and can be measured using methods known in the art. For example, differential scanning calorimetry can be used for measurement. For specific details, reference can be made to the standard GB/T 19466.3-2004. In an example, the measurement can be performed according to the following method: 4-6 mg of a to-be-tested sample is placed in a sample chamber of a differential scanning calorimeter and heated from 25°C to 400°C at a heating rate of 10°C/min, to obtain a melting endothermic curve of the sample, and a temperature corresponding to a peak of the curve is a melting point of the sample.

In any embodiment of this application, the first base film and the second base film are each be independently made of a material selected from at least one of polyolefin and a derivative thereof, halogenated polyolefin and a derivative thereof, polyether and a derivative thereof, polyether ether ketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof. For example, the first base film may be made of polyolefin and a derivative thereof or halogenated polyolefin and a derivative thereof. The first base film may alternatively be made of polyether and a derivative thereof, polyether ether ketone and a derivative thereof, polyester and a derivative thereof, or the like. The first base film and the second base film may alternatively be made of polyvinylidene fluoride and a derivative thereof, polyethylene terephthalate, or the like. The derivative generally refers to a product derived when hydrogen atoms or atomic groups in a compound are substituted by other atoms or atomic groups. Using at least one of the above materials as the material for the first base film and the second base film can improve the chemical stability of the first base film and the second base film and also enables the separator to have high flexibility and high strength.

Referring to FIG. 2, an embodiment of this application provides a separator 10 including a first base film 11 and a second base film 12. In any embodiment of this application, a binding layer 13 is further disposed between the first base film 11 and the second base film 12, where the binding layer includes a binder. Optionally, the binding layer includes the binder and a filler.

When the binding layer is disposed between the first base film and the second base film and the binding layer includes the binder, process defects in a hot-pressing lamination process of the base film can be compensated, and the physical properties (such as the tensile strength, the puncture strength, and the heat resistance) of the separator can also be further improved. Thus, the reliability of the secondary battery is improved. The filler is located between the first base film and the second base film, thereby reducing the risk of powder falling.

In any embodiment of this application, the binder includes one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

In any embodiment of this application, the filler includes at least one of inorganic particles, organic particles, and an organic-metal framework material.

Optionally, the inorganic particles include one or more of inorganic particles with a dielectric constant above 5, inorganic particles with ionic conductibility but not storing ions, and inorganic particles capable of having electrochemical reactions.

Optionally, the inorganic particles with a dielectric constant above 5 may include at least one of boehmite, aluminum oxide, zinc oxide, silicon dioxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, magnesium lithium silicate, magnesium sodium silicate, bentonite, hectorite, zirconium titanate, barium titanate, Pb(Zr,Ti)O₃ (PZT for short), Pb1-mLamZr1-nTinO₃ (PLZT for short, 0<m<1, and 0<n<1), Pb(Mg₃Nb_{2/3})O₃-PbTiO₃ (PMN-PT for short), and respective modified inorganic particles thereof. Optionally, the inorganic particles may be modified through chemical modification and/or physical modification. The chemical modification includes modification by a coupling agent (for example, a silane coupling agent, a titanate coupling agent, or the like), modification by a surfactant, graft modification by a polymer, and the like. The physical modification may include mechanical force dispersion, ultrasonic dispersion, high-energy treatment, and the like. Agglomeration of inorganic particles can be reduced through the modification treatment, so that the binding layer can have a more stable and more uniform structure. In addition, selecting a coupling agent, surfactant, or polymer with a specific functional group to modify inorganic particles also helps to improve the wettability and retention characteristics of the binding layer to the electrolyte and improve the adhesion performance of the binding layer to the first base film and the second base film.

Optionally, the inorganic particles with ionic conductibility but not storing ions may include at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thio-phosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0<x1<2, 0 <y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, and 0<z4<7. Thus, the ionic conductivity of the separator can be further increased.

Optionally, the inorganic particles capable of having electrochemical reactions may include at least one of lithium-containing transition metal oxide, lithium-containing phosphate, a carbon-based material, a silicon-based material, a tin-based material, and a lithium titanium compound.

Optionally, the organic particles may include one or more of polycarbonate, polythiophene, polypyridine, polystyrene, polyacrylic wax, polyethylene, polypropylene, cellulose, cellulose modifier (such as carboxymethyl cellulose), melamine resin, phenolic resin, polyester (such as polyethylene terephthalate, polyethylene naphthalate, and polybutylene terephthalate), organosilicon resin, polyimide, polyamide-imide, polyarylamide, polyphenylene sulfide, polysulfone, polyether sulfone, polyether ether ketone, polyarylether ketone, and a copolymer of butyl acrylate and methyl methacrylate (such as a crosslinked polymer of butyl acrylate and methyl methacrylate).

Optionally, the organic-metal framework material may include one or more of a nitrogen-containing heterocyclic ligand structure, an organic carboxylic acid ligand structure, and a nitrogen-oxygen mixed ligand structure.

In some embodiments, a percentage of the binder may be greater than or equal to 10%, optionally 10%-30%, based on a total weight of the binding layer.

In some embodiments, a percentage of the filler may be less than or equal to 90%, optionally 40%-90% or 60%-80%, based on the total weight of the binding layer.

In some embodiments, the binding layer may further include a dispersant such as carboxymethyl cellulose, to adjust the viscosity of a binding layer slurry and improving the quality and uniformity of the binding layer.

In some embodiments, a percentage of the dispersant may be less than or equal to 25%, optionally less than or equal to 20%, based on the total weight of the binding layer.

The thickness of the binding layer is less than or equal to 4 µm, optionally 0.5-2 µm.

According to some embodiments, the thickness of the binding layer may be tested using devices and methods known in the art. Specifically, a scanning electron microscope (such as ZEISS Sigma 300) is used to obtain a cross-sectional scanning electron microscope (SEM) image of the separator with reference to JY/T010-1996. In an example, the test can be performed according to the following method: a plurality of regions are randomly selected from a cross section of the separator, the thickness of a coating is measured at a specified magnification for at least five times, measured values of different regions are statistically recorded, and a mean value is taken as the thickness of the binding layer.

In any embodiment of this application, a transverse direction thermal shrinkage rate of the separator at 250°C for 1 h is less than or equal to 0.4%, optionally less than or equal to 0.25%; and/or a longitudinal direction thermal shrinkage rate of the separator at 250°C for 1 h is less than or equal to 0.4%, optionally less than or equal to 0.25%; and/or a transverse direction tensile strength of the separator is larger than or equal to 2500 kg/cm², optionally 3000 kg/cm²-4000 kg/cm²; and/or a longitudinal direction tensile strength of the separator is larger than or equal to 2500 kg/cm², optionally 3000 kg/cm²-4000 kg/cm². When at least one of the above properties of the separator meets the given range, the separator has good heat resistance and physical properties, thereby improving the reliability of the secondary battery.

According to some embodiments, the transverse direction tensile strength, longitudinal direction tensile strength, transverse direction thermal shrinkage rate, and longitudinal direction thermal shrinkage rate of the first base film and the second base film all have meanings well known in the art and can be tested using devices and methods known in the art. For example, the test may be performed in accordance with the standard GB/T 36363-2018.

### [Preparation method of separator]

Referring to FIG. 3, an embodiment of this application provides a preparation method of separator. The preparation method includes the following steps.

Step S10. Provide a first base film and a second base film, where a melting point of the second base film is higher than a melting point of the first base film, and a creep flexibility of the first base film is larger than a creep flexibility of the second base film.

Step S20. Laminate the first base film and the second base film to obtain the separator.

The first base film and the second base film can be directly laminated through hot pressing. In the hot-pressing lamination process, an excessively high temperature results in low porosity and poor air permeability, and an excessively low temperature results in insufficient adhesion between the first base film and the second base film. Therefore, it is necessary to provide an appropriate hot pressing temperature through adjustment. Optionally, the hot pressing temperature is 20°C-50°C.

In any embodiment of this application, the preparation method of separator further includes:
providing a binding layer slurry, where the binding layer slurry includes a binder; coating the first base film and/or the second base film with the binding layer slurry; and then performing lamination.

Optionally, the binding layer slurry includes the binder and a filler. In this way, the binding layer can be disposed between the first base film and the second base film to improve the physical properties of the separator, thereby improving the reliability of the secondary battery.

Unless otherwise specified, raw materials (such as the first base film, the second base film, the binder, the filler, and the like) used in the preparation method of the separator are all commercially available.

### [Positive electrode plate]

In a secondary battery, a positive electrode plate generally includes a positive electrode current collector and a positive electrode film layer disposed on the positive electrode current collector, where the positive electrode film layer includes a positive electrode active material.

The positive electrode current collector may be a common metal foil sheet or a composite current collector (the composite current collector may be formed by providing a metal material on a polymer matrix). In an example, an aluminum foil may be used as the positive electrode current collector.

A specific type of the positive electrode active material is not limited. Active materials known in the art that can be used for positive electrodes of secondary batteries can be used, and persons skilled in the art can select an active material based on actual needs.

In an example, the positive electrode active material may include but is not limited to one or more of lithium transition metal oxide, olivine-structured lithium-containing phosphate, and respective modified compounds thereof. An Example of the lithium transition metal oxide may include but is not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. An example of the olivine-structured lithium-containing phosphate may include but is not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

The modified compounds of the foregoing materials may be obtained through doping modification and/or surface coating modification to the materials.

Generally, the positive electrode film layer optionally further includes a binder, a conductive agent, and another optional additive.

In an example, the conductive agent may be one or more of superconducting carbon, acetylene black, carbon black, Ketjen black, carbon dots, carbon nanotubes, Super P (SP), graphene, and carbon nanofiber.

In an example, the binder may be one or more of styrene-butadiene rubber (SBR), water-based acrylic resin (water-based acrylic resin), polyvinylidene fluoride (PVDF), polytetrafluoroethylene (PTFE), ethylene vinyl acetate copolymer (EVA), polyacrylic acid (PAA), carboxymethyl cellulose (CMC), polyvinyl alcohol (PVA), and polyvinyl butyral (PVB).

### [Negative electrode plate]

In a secondary battery, a negative electrode plate generally includes a negative electrode current collector and a negative electrode film layer disposed on the negative electrode current collector, where the negative electrode film layer includes a negative electrode active material.

The negative electrode current collector may be a common metal foil sheet or a composite current collector (for example, the composite current collector may be formed by providing a metal material on a polymer matrix). In an example, a copper foil may be used as the negative electrode current collector.

A specific type of the negative electrode active material is not limited. Active materials known in the art that can be used for negative electrodes of secondary batteries can be used, and persons skilled in the art can select an active material based on actual needs. In an example, the negative electrode active material may include but is not limited to one or more of artificial graphite, natural graphite, hard carbon, soft carbon, a silicon-based material, and a tin-based material. The silicon-based material may be selected from one or more of elemental silicon, a silicon-oxygen compound (such as silicon monoxide), a silicon-carbon compound, a silicon-nitrogen compound, and a silicon alloy. The tin-based material may be selected from one or more of elemental tin, a tin-oxygen compound, and a tin alloy. These materials are all commercially available.

In some embodiments, the negative electrode active material may include a silicon-based material to further increase the energy density of the battery.

Generally, the negative electrode film layer optionally further includes a binder, a conductive agent, and another optional additive.

In an example, the conductive agent may be one or more of superconducting carbon, acetylene black, carbon black, Ketjen black, carbon dots, carbon nanotubes, graphene, and carbon nanofiber.

In an example, the binder may be one or more of styrene-butadiene rubber (SBR), water-based acrylic resin (water-based acrylic resin), polyvinylidene fluoride (PVDF), polytetrafluoroethylene (PTFE), ethylene vinyl acetate (EVA), polyvinyl alcohol (PVA), and polyvinyl butyral (PVB).

In an example, the another optional additive may be a thickening and dispersant (for example, sodium carboxymethyl cellulose, CMC-Na) or a PTC thermistor material.

### [Electrolyte]

The secondary battery may include an electrolyte, and the electrolyte conducts ions between a positive electrode and a negative electrode. The electrolyte may include an electrolytic salt and a solvent.

In an example, the electrolytic salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

In an example, the solvent may be selected from one or more of ethylene carbonate (Ethylene Carbonate, EC), propylene carbonate (Propylene Carbonate, PC), methyl ethyl carbonate (Methyl Ethyl Carbonate, EMC), diethyl carbonate (Diethyl Carbonate, DEC), dimethyl carbonate (Dimethyl Darbonate, DMC), dipropyl carbonate (Dipropyl Carbonate, DPC), methyl propyl carbonate (Methyl Propyl Carbonate, MPC), diisopropyl carbonate (Diisopropyl Carbonate, EPC), butylene carbonate (Butylene Carbonate, BC), fluoroethylene carbonate (Fluoroethylene Carbonate, https://www.chembk.com/en/chem/Fluoroethylene%20Carbonate%20(FEC)FEC), methyl formate (Methyl Formate, MF), methyl acetate (Methyl Acetate, MA), ethyl acetate (Ethyl Acetate, EA), n-propyl acetate (n-Propyl Acetate, PA), methyl propionate (Methyl Propionate, MP), ethyl propanoate (Ethyl Propanoate, EP), n-propyl propionate (n-Propyl Propionate, PP), methyl butyrate (Methyl Butyrate, MB), ethyl butyrate (Ethyl Butyrate, EB), 1,4-butyrolactone (1,4-Butyrolactone, GBL), tetramethylene sulfone (Tetramethylene Sulfone, SF), methyl sulfone (Methyl Sulfone, MSM), methyl ethyl sulfone (Methyl Ethyl Sulfone, EMS), and diethyl sulfone (Diethyl Sulfone, ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge resistance performance of the battery, an additive for improving high-temperature performance of the battery, or an additive for improving low-temperature performance of the battery.

In some embodiments, the secondary battery may be a lithium-ion secondary battery. In any embodiment of this application, the secondary battery includes a positive electrode plate, a negative electrode plate, and a separator, where the separator is disposed between the positive electrode plate and the negative electrode plate, and the separator may be the separator according to any one of the foregoing embodiments.

In some embodiments, in the secondary battery, the first base film of the separator faces the negative electrode plate. To be specific, the base film on the side that has larger creep flexibility faces the negative electrode plate. When lithium dendrites precipitate on a negative electrode side, the thicker base film can better withstand the puncture of the lithium dendrites into the separator, reducing the risk of the separator being punctured and causing a short circuit between the positive and negative electrodes. In addition, the melting point of the second base film facing the positive electrode plate is higher than the melting point of the first base film, so the second base film can withstand higher temperatures, reducing the risk of a short circuit between the positive and negative electrodes caused by thermal breakdown of the separator. With such arrangement, the reliability of the secondary battery can be improved.

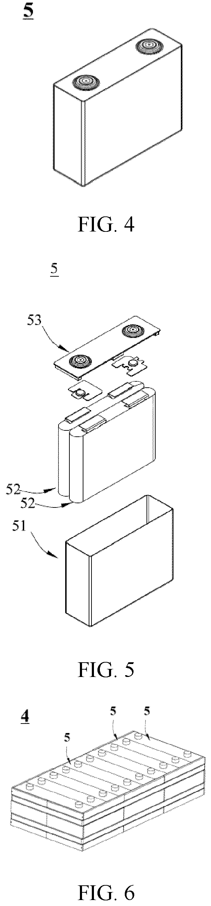

The secondary battery is not particularly limited in shape in the embodiments of this application and may be cylindrical, rectangular, or of any other shapes. FIG. 4 shows a secondary battery 5 of a rectangular structure as an example.

In some embodiments, the secondary battery may include an outer package. The outer package is used for packaging the positive electrode plate, the negative electrode plate, the separator, and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft package may be plastic, for example, may include one or more of polypropylene (PP), polybutylene terephthalate (PBT), and polybutylene succinate (PBS).

In some embodiments, referring to FIG. 5, the outer package may include a housing body 51 and a cover plate 53. The housing body 51 may include a base plate and a side plate connected onto the base plate, and the base plate and the side plate enclose an accommodating cavity. The housing body 51 has an opening in communication with the accommodating cavity, and the cover plate 53 can cover the opening to close the accommodating cavity.

The preparation method of the secondary battery in this application is well known. In some embodiments, a positive electrode plate, a separator, a negative electrode plate, and an electrolyte may be assembled into a secondary battery. For example, the positive electrode plate, separator, and negative electrode plate may be made into an electrode assembly through winding and/or lamination; and the electrode assembly is placed into an outer package, followed by drying, and the electrolyte is injected, followed by processes such as vacuum packaging, standing, formation, and shaping, to obtain a battery cell. A plurality of battery cells may be further connected in series, parallel, or series-parallel to form a battery module. A plurality of battery modules may be further connected in series, parallel, or series-parallel to form a battery pack. In some embodiments, the plurality of battery cells may alternatively directly form a battery pack.

FIG. 6 shows a battery module 4 as an example. Referring to FIG. 6, in the battery module 4, a plurality of secondary batteries 5 may be sequentially arranged in a length direction of the battery module 4. Certainly, the secondary batteries may alternatively be arranged in any other manners. Further, the plurality of secondary batteries 5 may be fastened using fasteners.

The battery module 4 may alternatively include a housing with an accommodating space, and the plurality of secondary batteries 5 are accommodated in the accommodating space.

In some embodiments, the battery module may be further assembled into a battery pack, and a quantity of battery modules included in the battery pack may be adjusted based on application and capacity of the battery pack.

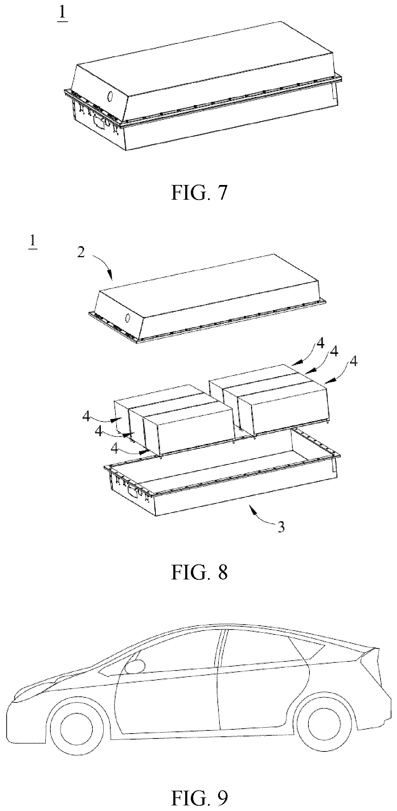

FIG. 7 and FIG. 8 show a battery pack 1 as an example. Referring to FIG. 7 and FIG. 8, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### Apparatus

This application further provides an electric apparatus, where the electric apparatus includes the secondary battery of this application. The battery cell, battery module, or battery pack can be used as a power source for the apparatus, or as an energy storage unit for the apparatus. The apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

A battery cell, battery module, or battery pack may be selected according to requirements for using the apparatus.

FIG. 9 shows an electric apparatus as an example. The electric apparatus may be a battery electric vehicle, a hybrid electric vehicle, or a plug-in hybrid electric vehicle. To satisfy requirements of the electric apparatus for high power and high energy density of the secondary battery, a battery pack or a battery module may be used.

In another example, the electric apparatus may be a mobile phone, a tablet computer, or a notebook computer. Such electric apparatus is generally required to be light and thin and may use a battery cell as its power source.

The following further describes beneficial effects of this application with reference to examples.

To describe the technical problems solved by the embodiments of this application, technical solutions, and beneficial effects more clearly, the following further provides descriptions in detail with reference to the embodiments and accompanying drawings. Apparently, the described embodiments are only some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the protection scope of this application.

### I. Preparation of the battery

### Example 1

### 1. Preparation of positive electrode plate

A positive electrode active material LiNi_{0.8}Co_{0.1}Mn_{0.1}O₂ (NCM811), a conductive agent carbon black (Super P), and a binder polyvinylidene fluoride (PVDF) at a mass ratio of 96.2:2.7:1.1 were mixed to uniformity in an appropriate amount of solvent N-methylpyrrolidone (N-Methylpyrrolidone, NMP) to obtain a positive electrode slurry. The positive electrode slurry was evenly applied onto a positive electrode current collector aluminum foil, followed by drying, cold pressing, slitting, and cutting, to obtain a positive electrode plate.

### 2. Preparation of negative electrode plate

A negative electrode active material artificial graphite, a conductive agent carbon black (Super P), a binder styrene-butadiene rubber (SBR), and sodium carboxymethyl cellulose (CMC-Na) at a mass ratio of 96.4:0.7:1.8:1.1 were mixed to uniformity in an appropriate amount of solvent deionized water to form a negative electrode slurry. The negative electrode slurry was evenly applied onto a negative electrode current collector copper foil, followed by drying, cold pressing, slitting, and cutting, to obtain a negative electrode plate.

### 3. Preparation of separator

(1) A first base film was provided: the material included polyethylene (PE), with a melting point of 135°C, a creep flexibility of 0.0013 MPa⁻¹, a crystallinity of 88%, and a molecular mass of 500000; and
   a second base film was provided: the material included polypropylene (PP), with a melting point of 165°C, a creep flexibility of 0.0012 MPa⁻¹, crystallinity of 24%, and a molecular mass of 370000.
(2) Preparation of a binding layer slurry: boehmite, polyacrylate, and carboxymethyl cellulose at a ratio of 4:1:1 were mixed to uniformity in an appropriate amount of solvent deionized water, to form a binding layer slurry.
(3) The binding layer slurry obtained in step (2) was applied onto the PE base film to form a binding layer, and the PP and PE base films were subjected to hot-pressing molding to ensure that the binding layer was between the PP base film and the PE base film, to prepare a separator.

### 4. Preparation of electrolyte

Ethylene carbonate (EC) and ethyl methyl carbonate (EMC) at a mass ratio of 30:70 were mixed to obtain an organic solvent. A fully dried electrolytic salt LiPF₆ was dissolved in the solvent mixture, with a concentration of the electrolytic salt being 1.0 mol/L; and then the electrolytic salt and the solvent mixture were mixed to uniformity to obtain an electrolyte.

### 5. Preparation of secondary battery

The positive electrode plate, separator, and negative electrode plate were stacked in sequence to ensure that the separator is located between the positive electrode plate and the negative electrode plate for separation; then, the stack was wound to obtain an electrode assembly; the electrode assembly was placed into an outer package; and the prepared electrolyte was injected into a dried housing body, followed by processes such as vacuum packaging, standing, formation, and shaping to obtain a secondary battery.

The preparation methods of the secondary batteries in Examples 2-14 and Comparative Examples 1-4 were similar to that of the secondary battery in Example 1, except that different separators were used. Specific details are shown in Table 1.

Unless otherwise specified, raw materials (such as the first base film, the second base film, the binder, the filler, and the like) used in the preparation method of the separator are all commercially available.

### II. Performance test

### (1) Creep flexibility test of separator

Step 1. Six groups of polymer film parallel samples were taken, which were rectangular sample strips with a width of 4 mm and a length of 50 mm.

Step 2. The sample strips were clamped on a clamp of a dynamic thermal mechanical analyzer, where a test mode was adjusted to a creep mode, and the test was performed at room temperature for 0-220 min.

### (2) Battery cycle life (25°C)

The batteries in the above examples and comparative examples were charged and discharged at 25°C for the first time according to a process as follows: at 25°C, the secondary battery was left standing for 30 min, charged to 4.35 V at a constant current of 1C, still charged at a constant voltage until the current is ≤ 0.05C, and then discharged to 2.8 V at a constant current of 1C. This was one charge-discharge cycle, and a discharge capacity at that moment was recorded as a discharge capacity of the first cycle of the battery. The charge-discharge cycle was performed repeatedly, and the number of cycles when the capacity dropped to 80% was recorded.

**Table 1: Battery performance test results of examples and comparative examples**

| Serial No. | Separator structure | | | | | | | | | Battery performance | | |
|---|---|---|---|---|---|---|---|---|---|---|---|---|
| | First base film | | | | Second base film | | | | Creep flexibility ratio | Transverse direction thermal shrinkage rate (250°C) | Transvers e direction tensile strength TD | Cycle life at 25°C (number) |
| | Material | Crystallinity (%) | Molecular mass | Creep flexibility (MPa⁻¹) | Material | Crystallinity (%) | Molecular mass | Creep flexibility (MPa⁻¹) | | | | |
| Example 1 | PE | 88 | 50 | 0.0013 | PP | 24 | 37 | 0.0012 | 1.08 | 0.20% | 3100 | 3200 |
| Example 2 | PE | 86 | 75 | 0.0017 | PP | 29 | 51 | 0.0013 | 1.31 | 0.15% | 3200 | 3300 |
| Example 3 | PE | 65 | 210 | 0.0028 | PP | 47 | 28 | 0.0020 | 1.40 | 0.14% | 3343 | 3315 |
| Example 4 | PE | 70 | 182 | 0.0025 | PP | 42 | 19 | 0.0016 | 1.56 | 0.14% | 3490 | 3325 |
| Example 5 | PE | 75 | 170 | 0.0022 | PP | 69 | 130 | 0.0014 | 1.57 | 0.15% | 3685 | 3343 |
| Example 6 | PE | 60 | 230 | 0.0039 | PP | 49 | 163 | 0.0023 | 1.70 | 0.18% | 4000 | 3400 |
| Example 7 | PE | 78 | 150 | 0.0019 | PP | 67 | 113 | 0.0010 | 1.90 | 0.14% | 3712 | 3412 |
| Example 8 | PE | 85 | 90 | 0.0032 | PP | 38 | 65 | 0.0015 | 2.13 | 0.22% | 3517 | 3213 |
| Example 9 | PE | 83 | 120 | 0.004 | PP | 44 | 80 | 0.0017 | 2.35 | 0.21% | 3285 | 3218 |
| Example 10 | PE | 75 | 30 | 0.0013 | PP | 37 | 18 | 0.0005 | 2.60 | 0.23% | 3197 | 3220 |
| Example 11 | PE | 80 | 136 | 0.005 | PP | 59 | 105 | 0.0018 | 2.78 | 0.25% | 3143 | 3225 |
| Example 12 | PE | 130 | 75 | 0.009 | PP | 43 | 19 | 0.0023 | 3.91 | 0.30% | 2895 | 3100 |
| Example 13 | PE | 65 | 210 | 0.0028 | PTFE | 70 | 40 | 0.0023 | 1.22 | 0.10% | 3142 | 3300 |
| Example 14 | PE | 70 | 182 | 0.0025 | PET | 33 | 2.5 | 0.0014 | 1.79 | 0.12% | 3242 | 3335 |
| Comparative example 1 | PE | 75 | 30 | 0.0003 | PP | 37 | 18 | 0.001 | 0.30 | 0.50% | 2550 | 2907 |
| Comparative example 2 | PE | 130 | 75 | 0.005 | PP | 43 | 19 | 0.009 | 0.56 | 0.50% | 2455 | 2805 |
| Comparative example 3 | PE | 86 | 75 | 0.0017 | PTFE | 70 | 40 | 0.0023 | 0.74 | 0.40% | 2243 | 2830 |
| Comparative example 4 | PE | 88 | 50 | 0.0013 | PET | 33 | 2.5 | 0.0014 | 0.93 | 0.42% | 2306 | 2856 |

As can be seen from Table 1, in Example 1 to Example 14, the melting point of the first base film is lower than the melting point of the second base film; moreover, the creep flexibility of the first base film is larger than the creep flexibility of the second base film; and the prepared batteries have small transverse direction thermal shrinkage rate, high transverse direction tensile strength, and long cycle life. Whereas, in Comparative example 1 to Comparative example 4, the separators do not simultaneously meet the conditions that the melting point of the first base film is lower than the melting point of the second base film, and the creep flexibility of the first base film is larger than the creep flexibility of the second base film, and the prepared batteries have large transverse direction thermal shrinkage rate and short cycle life. Therefore, with the use of the separator with good creep flexibility in this application, and under the same cycling conditions and battery performance standards, the batteries prepared using the separator provided in this application have good cycling performance. That is, under the same battery performance standards, the batteries prepared using the separator provided in this application can undergo more charge-discharge cycles and have higher reliability.

The foregoing descriptions are merely specific embodiments of this application, but are not intended to limit the protection scope of this application. Any equivalent modifications or replacements readily figured out by persons skilled in the art within the technical scope disclosed in this application shall fall within the protection scope of this application. Therefore, the protection scope of this application shall be subject to the protection scope of the claims.

## Claims

1. A separator, comprising a first base film and a second base film, wherein a melting point of the second base film is higher than a melting point of the first base film, and a creep flexibility of the first base film is larger than a creep flexibility of the second base film.

2. The separator according to claim 1, wherein
a ratio of the creep flexibility of the first base film and the creep flexibility of the second base film is 1.1-3.0, optionally 1.3-2.0.

3. The separator according to claim 1 or 2, wherein
the creep flexibility of the first base film is 0.0013 MPa⁻¹-0.0050 MPa⁻¹, optionally 0.0013 MPa⁻¹-0.0032 MPa⁻¹; and/or
the creep flexibility of the second base film is 0.0010 MPa⁻¹-0.0023 MPa⁻¹, optionally 0.0010 MPa⁻¹-0.0020 MPa⁻¹.

4. The separator according to any one of claims 1 to 3, wherein
a ratio of a crystallinity of the first base film and a crystallinity of the second base film is 1.1-5.0, optionally 1.5-3.0.

5. The separator according to any one of claims 1 to 4, wherein
the crystallinity of the first base film is 40%-90%, optionally 75%-85%; and/or
the crystallinity of the second base film is 20%-70%, optionally 30%-45%.

6. The separator according to any one of claims 1 to 5, wherein
a ratio of a relative molecular mass of a material of the first base film and a relative molecular mass of a material of the second base film is larger than or equal to 1.05, optionally 1.2-10.

7. The separator according to any one of claims 1 to 6, wherein
the relative molecular mass of the material of the first base film is 300000-2500000, optionally 500000-2000000; and/or
the relative molecular mass of the material of the second base film is 10000-2000000, optionally 10000-1200000.

8. The separator according to any one of claims 1 to 7, wherein
a ratio of a melting point of the first base film and a melting point of the second base film is 0.3-0.85, optionally 0.35-0.65.

9. The separator according to any one of claims 1 to 8, wherein
the melting point of the first base film is 120°C-280°C, optionally 130°C-265°C; and/or
the melting point of the second base film is 150°C-360°C, optionally 160°C-350°C.

10. The separator according to any one of claims 1 to 9, wherein
the first base film and the second base film are each independently selected from at least one of polyolefin and a derivative thereof, halogenated polyolefin and a derivative thereof, polyether and a derivative thereof, polyether ether ketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof.

11. The separator according to any one of claims 1 to 10, wherein
a binding layer is further disposed between the first base film and the second base film; the binding layer comprises a binder; and optionally, the binding layer comprises the binder and a filler.

12. The separator according to claim 11, wherein
the binder comprises one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

13. The separator according to claim 11 or 12, wherein
the filler comprises at least one of inorganic particles, organic particles, and an organic-metal framework material.

14. The separator according to any one of claims 1 to 13, wherein
a thickness of the binding layer is less than or equal to 3 µm, optionally 0.5-2 µm.

15. The separator according to any one of claims 1 to 14, wherein
a transverse direction thermal shrinkage rate of the separator at 250°C for 1 h is less than 0.4%, optionally less than or equal to 0.25%; and/or
a longitudinal direction thermal shrinkage rate of the separator at 250°C for 1 h is less than 0.4%, optionally less than or equal to 0.25%; and/or
a transverse direction tensile strength of the separator is larger than or equal to 2500 kg/cm², optionally 3000 kg/cm²-4000 kg/cm²; and/or
a longitudinal direction tensile strength of the separator is larger than or equal to 2500 kg/cm², optionally 3000 kg/cm²-4000 kg/cm².

16. A preparation method of separator, comprising:
providing a first base film and a second base film, wherein a melting point of the second base film is higher than a melting point of the first base film, and a creep flexibility of the first base film is larger than a creep flexibility of the second base film; and
laminating the first base film and the second base film to obtain the separator.

17. The preparation method of separator according to claim 16, further comprising:
preparing a binding layer slurry, wherein the binding layer slurry comprises a binder; coating the first base film and/or the second base film with the binding layer slurry; and then performing lamination, wherein
optionally, the binding layer slurry comprises the binder and a filler.

18. A secondary battery, comprising the separator according to any one of claims 1 to 15, or a separator prepared using the method according to claim 16 or 17.

19. The secondary battery according to claim 18, further comprising a positive electrode plate and a negative electrode plate, wherein the separator is disposed between the positive electrode plate and the negative electrode plate, and the first base film faces the negative electrode plate.

20. An electric apparatus, comprising the secondary battery according to claim 18 or 19.
